Europäisches Patentamt

European Patent Office

Office européen des brevets

(19)

(11) **EP 0 664 887 B1**

(12) **EUROPÄISCHE PATENTSCHRIFT**

(45) Veröffentlichungstag und Bekanntmachung des
Hinweises auf die Patenterteilung:
**10.06.1998 Patentblatt 1998/24**

(21) Anmeldenummer: **94921591.7**

(22) Anmeldetag: **23.07.1994**

(51) Int Cl.6: **G01P 3/46**, G01P 1/10

(86) Internationale Anmeldenummer:
**PCT/DE94/00856**

(87) Internationale Veröffentlichungsnummer:
**WO 95/05606 (23.02.1995 Gazette 1995/09)**

(54) **SCHALTUNGSANORDNUNG ZUR MESSUNG DER DREHZAHL EINES GENERATORS**

CIRCUITRY FOR MEASURING THE SPEED OF ROTATION OF AN ALTERNATOR

CIRCUIT PERMETTANT DE MESURER LA VITESSE DE ROTATION D'UN ALTERNATEUR

(84) Benannte Vertragsstaaten:
**DE FR GB IT**

(30) Priorität: **16.08.1993 DE 4327485**

(43) Veröffentlichungstag der Anmeldung:
**02.08.1995 Patentblatt 1995/31**

(73) Patentinhaber: **ROBERT BOSCH GMBH**
**70442 Stuttgart (DE)**

(72) Erfinder:
• **KOHL, Walter**
**D-74321 Bietigheim-Bissingen (DE)**
• **MITTAG, Rainer**
**D-70806 Kornwestheim (DE)**
• **HOEBER, Matthias**
**D-52062 Aachen (DE)**

(56) Entgegenhaltungen:
EP-A- 0 128 519          EP-A- 0 247 994
WO-A-90/07218           US-A- 4 079 306

**Beschreibung**

Stand der Technik

Die Erfindung geht aus von einer Schaltungsanordnung zur Messung der Drehzahl eines Generators nach dem Oberbegriff des unabhängigen Patentanspruchs. In Kraftfahrzeugen werden zur Erzeugung der elektrischen Energie üblicherweise Drehstromgeneratoren eingesetzt, die sich nach dem Anlauf des sie treibenden Motors selbst erregen. Damit diese Selbsterregung zuverlässig und sicher einsetzt, werden üblicherweise unmittelbar nach dem Starten des Motors des Kraftfahrzeuges Maßnahmen eingeleitet, die die Selbsterregung verbessern.

Eine gebräuchliche Methode besteht darin, die Ladekontrollampe zur Vorerregung des Generators zu verwenden. Dazu wird der Erregerwicklung über die Ladekontrollampe aus der Batterie im Startfall Energie zugeführt. Eine andere Methode besteht darin, eine zusätzliche Leitung zwischen der Batterie und der Erregerwicklung des Generators anzubringen und über diese Verbindung während des Startvorgangs einen zusätzlichen Erregerstrom zu leiten.

Die genannten Maßnahmen sind beispielsweise aus der DE-OS 38 43 161 bzw. der entsprechenden US-PS 5 107 198 bekannt. Bei den bekannten Lösungen sind zusätzliche Mittel zur Erkennung des Starts des Motors erforderlich.

Aus der US-PS 4 079 306 ist ein Fahrzeugbordnetz bekannt mit einem Drehstromgenerator, der eine Erregerwicklung aufweist und einen Spannungsregler, der die Ausgangsspannung des Generators durch Beeinflussung des Erregerstromes regelt. Der Drehstromgenerator weist weiterhin drei Phasenwicklungen auf, die miteinander in einem Punkt verbunden sind. Zwei der Phasenwicklungen sind in üblicher Weise über Erregerdioden mit der Basis des Regeltransistors des Spannungsreglers verbunden. Zur Verbesserung der Erregung bei Drehbeginn des Generators ist eine Phasenwicklung über wenigstens einen Widerstand mit der Basis des Regeltransistors verbunden. Über diese Verbindung wird dem Transistor eine vom Generator gelieferte Wechselspannung ohne Gleichrichtung zugeführt.

Bei Generator-Spannungsreglersystemen ist jedoch auch bekannt, zur Starterkennung die drehzahlabhängige Wechselspannung in einer Phasenwicklung des Drehstromgenerators heranzuziehen. Es wird dabei im Spannungsregler eine Spannungsmessung durchgeführt, bei der die Spannung zwischen der Phase und Masse gemessen wird und bei Überschreiten eines Schwellwertes ein Start des Motors und damit eine beginnende Drehung des Drehstromgenerators erkannt wird.

Diese Art der Starterkennung hat den Nachteil, daß bei einer zu hohen Einschaltschwelle die Angehdrehzahl des Generators zu hoch wird und bei einer zu niedrigen Schwelle der Störabstand zu klein wird, so daß irrtümliche Starterkennungen erfolgen können.

Vorteile der Erfindung

Die erfindungsgemäße Schaltungsanordnung mit den Merkmalen des Anspruchs 1 hat demgegenüber den Vorteil, daß entweder die Schwellenspannung bei gleicher Angehdrehzahl erhöht werden kann, wodurch der Störabstand verbessert wird oder daß die Angehdrehzahl erniedrigt werden kann. Die Schwellenspannung ist dabei die Spannung, bei deren Überschreiten der Drehbeginn des Generators erkannt wird.

Erzielt wird dieser Vorteil, indem bei einem Generator mit in Sternform geschalteten Phasenwicklungen die Spannung zwischen einer Phase und Masse ausgewertet wird, während eine andere Phasenwicklung über einen weiteren Widerstand auf Masse geschaltet wird. Durch diese Maßnahme wird ein Spannungsteiler erhalten, der aus dem Eingangswiderstand des Spannungsmessers und dem zusätzlichen Widerstand besteht, wobei dieser Spannungsteiler an der verketteten Spannung zwischen den beiden Phasenwicklungen liegt. Diese verkettete Phasenspannung ist um einen Faktor $\sqrt{3}$ größer als die Phasenspannung.

Weiterhin ist vorteilhaft, daß die Schwellenspannung, bei deren Überschreiten der Drehbeginn des Generators erkannt wird, durch geeignete Wahl bzw. Variation des weiteren Widerstandes einfach eingestellt werden kann.

Zeichnung

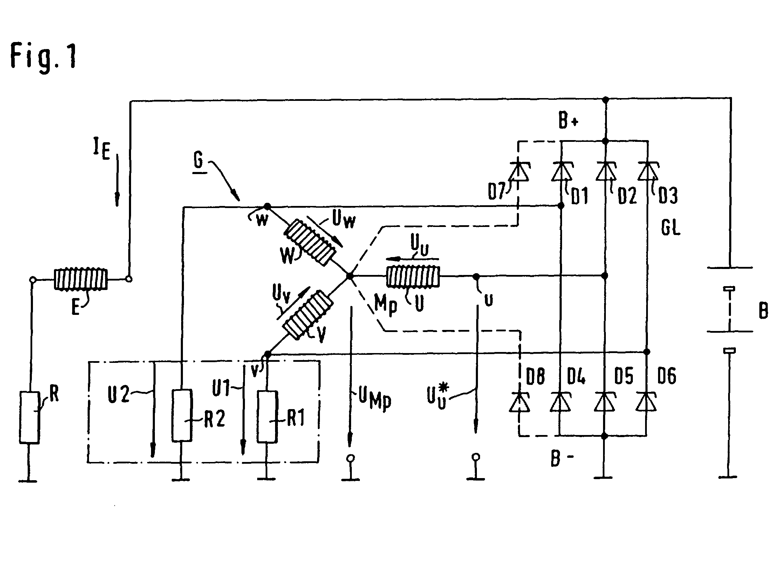

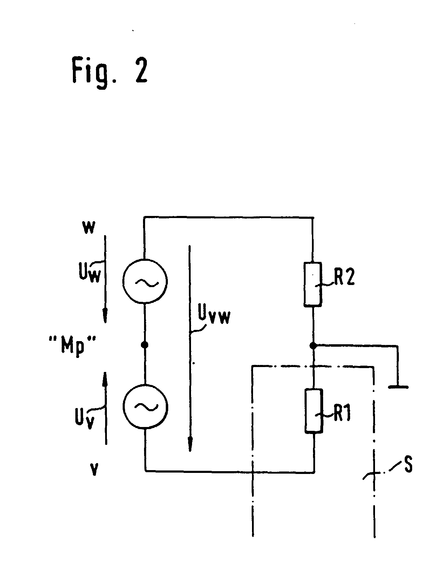

Ein Ausführungsbeispiel der Erfindung ist in der Zeichnung dargestellt und wird in der zugehörigen Beschreibung erläutert. Es zeigt dabei Figur 1 eine erfindungsgemäße Schaltungsanordnung und in Figur 2 ist ein Ersatzschaltbild dargestellt, das die Zusammenhänge leichter erkennen läßt.

Beschreibung des Ausführungsbeispieles

In Figur 1 ist ein Drehstromgenerator G mit den Phasenwicklungen U, W und V, die in einem gemeinsamen Mittelpunkt MP miteinander verbunden sind, dargestellt. Die Phasenwicklungen U, V und W sind über Anschlüsse u, v, w mit den Dioden bzw. Zenerdioden der Gleichrichterbrücke GL verbunden.

Die Gleichrichterdioden GL sind über Anschlüsse B+ mit dem Pluspol der Batterie sowie über B- mit dem Minuspol der Batterie B bzw. Masse verbunden. Zwischen dem Mittelpunkt MP zwischen den Phasenwicklungen und B+ bzw. B- kann noch je eine weitere Diode bzw. Zenerdiode D7, D8 geschaltet sein. Die Dioden der Gleichrichterbrücke sind mit D1 bis D6 bezeichnet.

An den Phasenwicklungen U, V, W liegen die Spannungen Uu, Uv, Uw. Zwischen dem Anschluß u und Masse liegt die Spannung Uu, zwischen dem Mittelpunkt Mp und Masse liegt die Spannung UMp.

Zur Messung der Generatordrehzahl $n_G$ ist zwischen den Anschluß v der Phasenwicklung V und Masse der widerstand R1 geschaltet, an dem die / Spannung U1 abfällt. Dieser Widerstand R1 ist der Innenwiderstand bzw. der Eingangswiderstnd einer Spannungserfassung S.

Aus der Spannung U1, die eine drehzahlabhängige Wechselspannung ist, läßt sich die Drehzahl des Generators G bestimmen, indem beispielsweise die Periode der Wechselspannung ermittelt und daraus in bekannter Weise die Drehzahl berechnet wird. Durch Auswertung der Höhe der Spannung U1 und Vergleich mit einem Schwellwert US kann eine Drehung des Generators dann erkannt werden, wenn die Spannung U1 die Spannung US überschreitet.

Ein zusätzlicher Widerstand R2, an dem die Spannung U2 abfällt, ist zwischen den Anschluß w und Masse geschaltet. Dieser Widerstand verbessert die Spannungsauswertung an R1 wesentlich, so daß die Erkennung, daß der Generator sich dreht, ebenfalls verbessert wird.

Die Widerstände R1 und R2 bzw. die Spannungserfassung S mit dem Innenwiderstand R1 sind beispielsweise Bestandteil des Spannungsreglers R. Die Auswertungen laufen üblicherweise ebenfalls im Spannungsregler R ab.

In Figur 2 ist ein Ersatzschaltbild mit den Spannungsquellen Uv und Uw dargestellt, dem die Spannungsverteilung bei einer Schaltung mit dem Widerstand R2 zu entnehmen ist. Die beiden Spannungsquellen ersetzen dabei die Phasenwicklungen V und W mit den Spannungen Uv und Uw.

Wird eine andere als die zur Drehzahlerfassung im Regler verwendete Phase des Generators über einen Widerstand R2 gegen Masse belastet, so liegt ein Spannungsteiler aus R2 und dem Eingangswiderstand R1 der Spannungs- bzw. Drehzahlerfassungsschaltung des Spannungsreglers an der verketteten Spannung Uvw des Generators, bei der im Ausführungsbeispiel gewählten Anordnung. Diese Spannung ist um den Faktor $\sqrt{3}$ größer als die Phasenspannung.

Da die auszuwertende Spannung um den Faktor $\sqrt{3}$ größer ist als eine der Phasenspannungen, liegt gegenüber der Drehzahlmessung mittels der Auswertung einer Phasenspannung ein größerer Spannungsbereich vor, der zur Bestimmung des Drehbeginns des Generators ausgenutzt werden kann. Es kann damit der Spannungsgrenzwert, bei dessen Übersteigen eine Drehung des Generators erkannt wird in dem um $\sqrt{3}$ vergrößerten Spannungsbereich erhöht werden, wodurch der Störabstand vergrößert wird und ein irrtümliches Erkennen, daß sich der Generator dreht, verringert wird.

Es kann aber auch mit einem relativ niedrigen Grenzwert gearbeitet werden, infolge der um $\sqrt{3}$ erhöhten Spannung gegenüber der Auswertung mit einer Phasenspannung allein wird ein Drehen des Generators früher erkannt und die Erregung kann bereits früher eingeleitet werden, die sogenannte Angeh-Drehzahl des Generators ist dann gegenüber der Auswertung mit einer der Phasenspannungen ohne den zusätzlichen erfindungsgemäßen Widerstand geringer.

Durch Variation des Wertes von R2 kann am festen Eingangswiderstand R1 des Spannungsreglers eine beliebige Spannung gegen Masse eingestellt werden. Es kann damit die Schwellenspannung an R1 durch R2 verringert werden, so daß vom Spannungsregler bereits bei geringeren Generatordrehzahlen das Drehen des Generators dann erkannt wird, wenn die gemessene Spannung die Schwellenspannung übersteigt.

Nach dem Erkennen, daß der Generator sich dreht, ist auch der Start der Brennkraftmaschine erkannt und der Spannungsregler R kann direkt Maßnahmen einleiten, die eine Verbesserung der Vorerregung bewirken.

**Patentansprüche**

1. Schaltungsanordnung zur Messung der Drehzahl eines Generators (G) mit einer Erregerwicklung (E) und mit einem Spannungsregler (R), der die Ausgangsspannung des Generators durch Beeinflussung des Erregerstromes regelt, mit drei Phasenwicklungen (U,V,W), die miteinander in einem Punkt verbunden sind, wobei die Spannung an einer ersten Phasenwicklung (V) gemessen wird und die erhaltene drehzahlabhängige Wechselspannung zur Drehzahlbestimmung ausgewertet wird, dadurch gekennzeichnet, daß eine andere, zweite Phasenwicklung (W) über einen ersten Widerstand (R2) mit Masse verbunden ist.

2. Schaltungsanordnung nach Anspruch 1, dadurch gekennzeichnet, daß die erste Phasenwicklung (V) über einen zweiten Widerstand (R1) auf Masse gelegt ist, und der Spannungsabfall über dem zweiten Widerstand (R1) als drehzahlabhängige Wechselspannung ausgewertet wird.

3. Schaltungsanordnung nach Anspruch 2, dadurch gekennzeichnet, daß der zweite Widerstand (R1) der Innenwiderstand des Spannungsreglers ist.

4. Schaltungsanordnung nach Anspruch 3, dadurch gekennzeichnet, daß der erste Widerstand (R2) variabel ist und so eingestellt wird, daß am festen zweiten Widerstand (R1) eine vorgebbare Spannung gegen Masse eingestellt wird.

5. Schaltungsanordnung nach Anspruch 4, dadurch gekennzeichnet, daß die am zweiten Widerstand (R1) gemessene Spannung (U1) mit einer Schwellspannung (Us) verglichen wird und daß dann, wenn die gemessene Spannung (U1) die Schwellspannung (Us) überschreitet, ein Drehen des Generators (G) erkannt wird.

**6.** Schaltungsanordnung nach Anspruch 5, dadurch gekennzeichnet, daß nach dem Erkennen, daß sich der Generator (G) dreht, vom Spannungsregler (R) Maßnahmen eingeleitet werden, die die Erregung einleiten.

## Claims

**1.** Circuit arrangement for measuring the rotational speed of a generator (G) with an exciter winding (E) and with a voltage controller (R) which controls the output voltage of the generator by influencing the exciter current, with three phase windings (U,V,W) which are connected to one another at a point, the voltage being measured at a first phase winding (V) and the rotational-speed-dependent alternating voltage obtained being evaluated in order to determine the rotational speed, characterized in that a different, second phase winding (W) is connected to earth via a first resistor (R2).

**2.** Circuit arrangement according to Claim 1, characterized in that the first phase winding (V) is connected to earth via a second resistor (R1), and the voltage drop across the second resistor (R1) is evaluated as a rotational-speed-dependent alternating voltage.

**3.** Circuit arrangement according to Claim 2, characterized in that the second resistor (R1) is the internal resistor of the voltage controller.

**4.** Circuit arrangement according to Claim 3, characterized in that the first resistor (R2) is variable and is set in such a way that a predeterminable voltage to earth is set at the fixed second resistor (R1).

**5.** Circuit arrangement according to Claim 4, characterized in that the voltage (U1) measured at the second resistor (R1) is compared with a threshold voltage (Us), and characterized in that rotation of the generator (G) is detected when the measured voltage (U1) exceeds the threshold voltage (Us) .

**6.** Circuit arrangement according to Claim 5, characterized in that, after it has been detected that the generator (G) is rotating, measures which initiate excitation are initiated by the voltage controller (R).

## Revendications

**1.** Circuit pour mesurer la vitesse de rotation d'un générateur (6) comprenant :

- un enroulement d'excitation (E) et un régulateur de tension R régulant la tension de sortie du générateur en influençant le courant d'excitation,
- trois enroulements de phase (U, V, W) reliés en un point,
- la tension étant mesurée sur le premier enroulement de phase (V) et la tension alternative dépendant de la vitesse de rotation obtenue étant exploitée pour déterminer la vitesse de rotation,

caractérisé en ce que
un autre, second, enroulement de phase (W) est relié à la masse par l'intermédiaire d'une première résistance (R2).

**2.** Circuit selon la revendication 1,
caractérisé en ce que
le premier enroulement de phase (V) est mis à la masse par l'intermédiaire d'une seconde résistance (R1) et la chute de tension aux bornes de la seconde résistance (R1) est exploitée comme tension alternative dépendant de la vitesse de rotation.

**3.** Circuit selon la revendication 2,
caractérisé en ce que
la seconde résistance (R1) est la résistance interne du régulateur de tension.

**4.** Circuit selon la revendication 3,
caractérisé en ce que
la première résistance (R2) est variable et est réglée pour avoir une tension prédéterminée par rapport à la masse sur la seconde résistance fixe (R1).

**5.** Circuit selon la revendication 4,
caractérisé en ce que
la tension (U1) mesurée sur la seconde résistance (R1) est comparée à une tension de seuil Us et si la tension mesurée U1 dépasse la tension de seuil Us on considère que le générateur (6) tourne.

**6.** Circuit selon la revendication 5,
caractérisé en ce qu'
après avoir reconnu que le générateur (6) tourne, le régulateur de tension (R) prend des mesures qui induisent l'excitation.

# Fig.1

EP 0 664 887 B1

# Fig. 2